# EUROPÄISCHE PATENTSCHRIFT

(11) **EP 0 891 910 B1**
(45) Veröffentlichungstag und Bekanntmachung des Hinweises auf die Patenterteilung: **02.05.2002**
(21) Anmeldenummer: 97810505.4
(22) Anmeldetag: 17.07.1997
(51) Int. Cl.: B61D 17/04, B62D 33/04

(54) **Konstruktion mit Profilen und Verbundplatten**
Construction with profiles and composite panels
Construction de profils et panneau composite

(43) Veröffentlichungstag der Anmeldung: 20.01.1999
(73) Patentinhaber: Alcan Technology & Management AG, 8212 Neuhausen am Rheinfall (CH)
(72) Erfinder: Fehr, Peter, 8442 Hettlingen (CH); Betschart, Roger, 8104 Weiningen (CH); Dean, Robert joel, 8248 Uhwiesen (CH); Kampmann, Lutz, 8222 Beringen (CH); Von Ballmoos, Andreas, 6372 Ennetmoos (CH)

(56) Entgegenhaltungen:
- EP-A- 0 608 761
- EP-A- 0 622 285
- DE-A- 3 732 086

## Beschreibung

Die Erfindung betrifft eine Konstruktion mit Profilen aus Leichtmetall und an die Profile angeschlossenen Leichtbau-Verbundplatten. Im Rahmen der Erfindung liegt auch eine Verwendung der Konstruktion.

An einen Wagenkasten für Schnellbahnen werden hohe Anforderungen bezüglich Druckdichtigkeit und Drucksteifigkeit, Schall- und Wärmedämmung, Kollisionstoleranz, Gewicht sowie Fertigung und Montage gestellt. Wagenkasten bekannter Bauart vermögen den gestellten Anforderungen nicht in allen Punkten zu genügen.

Bei einem in der EP-A-0622285 offenbarten Wagenkasten der eingangs erwähnten Art bestehen die Leichtbau-Verbundplatten aus einem beidseitig mit Deckschichten aus Kunststoff beplankten Kern aus Kunststoff. Die Verbindung zwischen den Verbundplatten und den längslaufenden Trägerprofilen erfolgt über ein Zwischenprofil aus Aluminium, das einerseits zwischen den Deckschichten der Verbundplatte eingeklebt und andererseits mit dem Trägerprofil verschweisst ist.

Die DE-A1-3 732 086 offenbart einen Wagenkasten der eingangs genannten Art, bei welchem die Verbundplatten einen Kern aus Kunsstoff aufweisen, der swischen zwei Deckblechen aus Leitchtmetall verklebt ist.

Der Erfindung liegt der daher die Aufgabe zugrunde, eine Konstruktion der eingangs erwähnten Art zu schaffen, die sich insbesondere durch ein geringes Gewicht, eine hohe Steifigkeit sowie eine gute Dauerfestigkeit auszeichnet. Die Konstruktion soll zudem einfach und kostengünstig herzustellen und vielseitig einsetzbar sein.

Zur erfindungsgemässen Lösung der Aufgabe führt, dass
- die Deckbleche ein in die Verbundplatte integriertes Anschlussprofil aus Leichtmetall teilweise übergreifen und diesem formschlüssig aufliegen,
- das Anschlussprofil Anschlussstreifen aufweist, die am Profil entsprechend angeordneten Anschlussstreifen paarweise anliegen,
- zumindest einer der Anschlussstreifen mit dem diesem anliegenden Anschlussstreifen mechanisch verbunden ist,
- zumindest einer der Anschlussstreifen des Profils oder des Anschlussprofils zur Erzeugung einer auf den anliegenden Anschlussstreifen wirkenden Vorspannung gegenüber einer Auflageebene um einen Winkel geneigt ausgebildet ist, und
- der zumindest eine vorgespannte Anschlussstreifen an seiner freien Kante mit dem diesem anliegenden Anschlussstreifen über eine Schweissung verbunden ist.

Die mechanische Verbindung der beiden Anschlussstreifen ist bevorzugt eine Nietverbindung, kann aber beispielsweise auch geschraubt oder genagelt sein.

Die Schweissung ist bevorzugt als Laserschweissung ausgeführt.

Grundsätzlich ist es möglich, die Verbindung zwischen Profil und Anschlussprofil auf beiden Seiten über je eine Laserschweissung zu realisieren. In der Praxis hat sich jedoch herausgestellt, dass insbesondere unter rauhen Montagebedingungen der zur Herstellung einer Laserschweissnaht erforderliche enge Toleranzbereich von max. etwa 0,8 mm für den Abstand der miteinander zu verschweissenden Teile besonders bei langen Schweissnähten von mehreren Metern Länge nicht immer eingehalten werden kann und der an sich automatisierte Schweissvorgang unterbrochen wird. Wird nun erfindungsgemäss auf der einen Seite der Verbindung genietet und auf der anderen Seite der Anschlussstreifen mit einer Vorspannung versehen, so kann die beim Laserschweissen vorgegebene Abstandstoleranz auch über grosse Schweissnahtlängen eingehalten werden.

Zweckmässigerweise wird bei der Ausbildung der Anschlussstreifen darauf geachtet, dass dort, wo die Konstruktion eine verhältnismässig grosse Profildicke erfordert, genietet wird und der für die Schweissung vorgesehene Anschlussstreifen zur Erzeugung einer gerade ausreichenden Vorspannung entsprechend dünn oder mit einer lokal reduzierten Profildicke ausgestaltet ist.

Bei einer besonders bevorzugten Ausgestaltung der erfindungsgemässen Konstruktion ist auch zumindest das einen vorgespannten Anschlussstreifen übergreifende Deckblech an einer freien Kante mit dem Anschlussstreifen über eine Schweissung, insbesondere über eine Laserschweissung verbunden. Da die Deckbleche gegenüber den Profildimensionen im allgemeinen eine viel geringere Dicke aufweisen, ist es zur Einhaltung der Abstandstoleranzen beim Laserschweissen ausreichend, das Blech während des Schweissvorganges mit einer mitlaufenden Anpressrolle an den Anschlussstreifen anzudrücken.

Da die für eine Laserschweissung vorgesehenen Teile absolut klebstoffrei gehalten werden müssen, kann das Anschlussprofil zumindest im Bereich des vorgespannten Anschlussstreifens eine vom Deckblech übergriffene, querschnittlich U-förmige Längsrinne als Klebstoffalle aufweisen.

Als Leichtmetallwerkstoffe eignen sich insbesondere Aluminiumlegierungen, jedoch können auch Magnesium oder Magnesiumlegierungen eingesetzt werden.

Bei einer besonders bevorzugten Verbundplatte besteht der Kern aus geschäumtem Polyetherimid (PEI) und die Deckbleche aus einer AlMg-Legierung, insbesondere einer Legierung vom Typ AlMg 3.

Die Profile und/oder die Anschlussprofile können beispielsweise aus einer AlMgSi-Legierung stranggepresst sein.

Das Anschlussprofil ist bevorzugt als Hohlkammerprofil ausgestaltet.

Die erfindungsgemässe Konstruktion ist vielseitig anwendbar und eignet sich insbesondere zur Herstellung von Boden-, Wand- und Dachteilen im Hochbau, Tiefbau, Fahrzeugbau, Schiffbau oder Containerbau.

Insbesondere beim Einsatz der Konstruktion im Freien wird zweckmässigerweise darauf geachtet, dass die Seite mit der Laserschweissnaht wegen ihrer Dichtigkeit die Aussenfläche bildet und die genieteten Teile auf der Innenseite bzw. dort angeordnet sind, wo ein direkter Kontakt mit Wasser oder anderen Flüssigkeiten vermieden werden kann. Mit der erfindungsgemässen Konstruktion lassen sich somit wasserdichte Bauteile fertigen, die überdies wegen ihres durchgehenden metallischen Kontaktes bei kastenförmigen Konstruktionen einen Faraday-Käfig bilden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 einen Querschnitt durch einen Wagenkasten;
- Fig. 2 einen vergrösserten Ausschnitt von Fig. 1 im Bereich einer Verbindung;
- Fig. 3 einen Querschnitt durch eine spezielle Ausführungsform einer Verbindung;
- Fig. 4 einen Querschnitt durch ein Anschlussprofil;
- Fig. 5 einen vergrösserten Ausschnitt von Fig. 3 im Bereich der Laserschweissung.

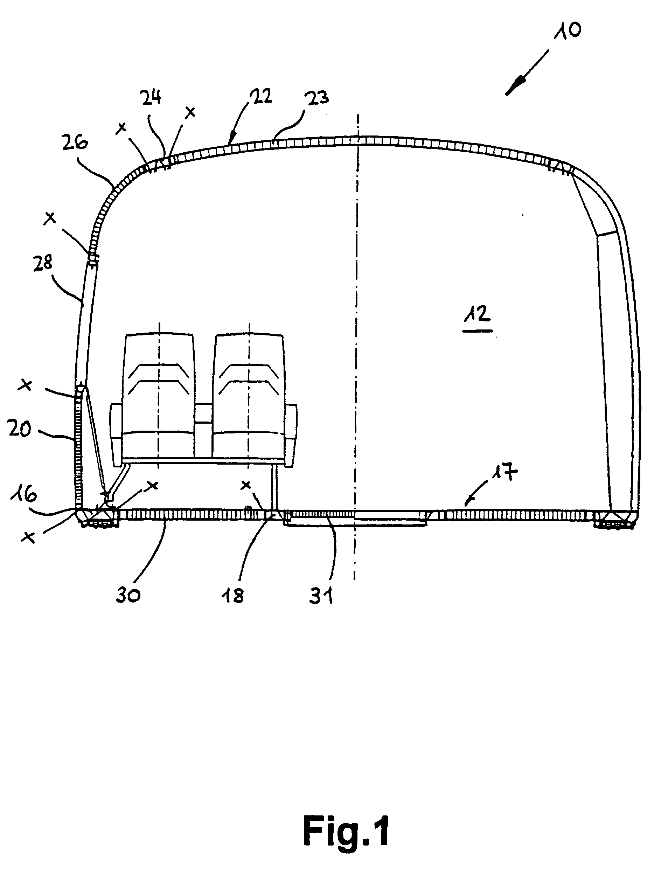

Ein Wagenkasten 10 einer Magnetschwebebahn für den Personentransport weist gemäss Fig. 1 eine Fahrgastzelle 12 auf. Für die Struktur der Zelle 12 ist eine Aluminium-Leichtbauweise mit kombinierter Profil-/Sandwichtechnik vorgesehen.

Die Fahrgastzelle 12 weist einen durch zwei Untergurten 16 begrenzten Boden 17 auf. Der Boden 17 wird gebildet durch zwei zwischen den Untergurten 16 und Längsträgern 18 festgelegten äusseren Bodenplatten 30 sowie eine zwischen den beiden Längsträgern 18 angeordnete innere Bodenplatte 31.

Von den Untergurten 16 ragen Seitenwände 20 auf, die über Fensterpfosten 28 mit einem Dach 22 verbunden sind.

Das Dach 22 umfasst ein zwischen Dachgurten 24 festgelegtes Hauptdachteil 23 sowie je ein Uebergangsteil 26 als Verbindungsglied zwischen den Dachgurten 24 und den Fensterpfosten 28.

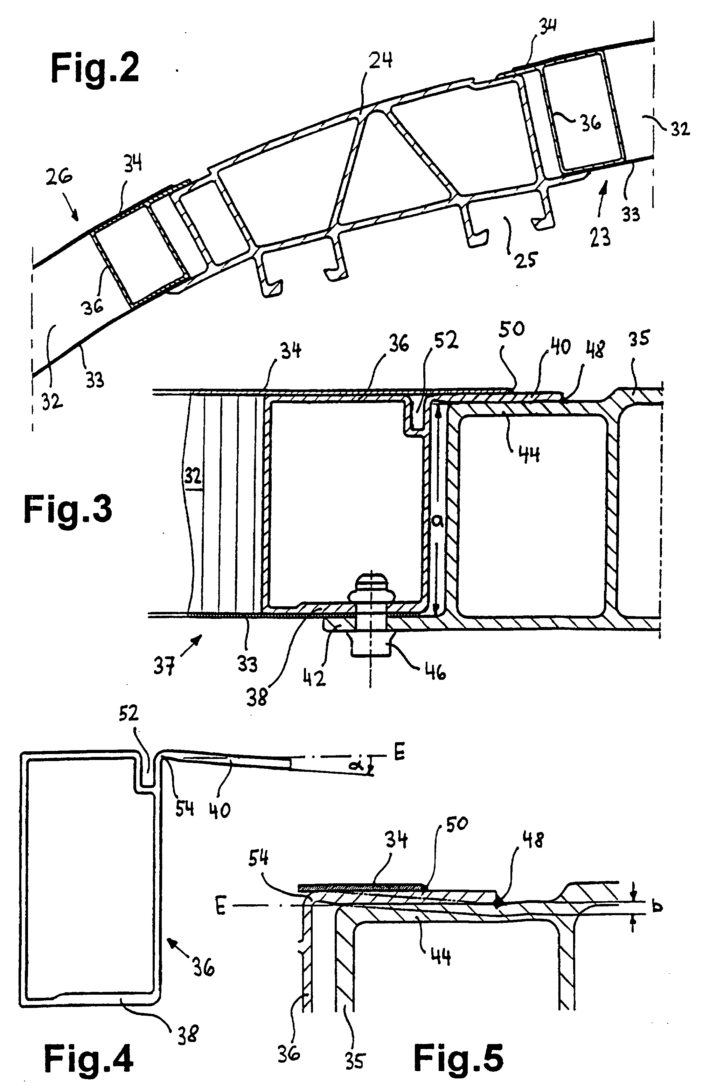

Fig. 2 zeigt den Anschluss des Hauptdachteils 23 sowie des Uebergangsteils 26 am Dachgurt 24. Der Dachgurt 24 ist als stranggepresstes Hohlkammerprofil aus einer AlMgSi-Legierung gefertigt. Das Hauptdachteil 23 sowie das Uebergangsteil 26 sind als gebogene Sandwichplatten ausgestaltet und weisen einen beidseitig mit Deckblechen 33, 34 beplankten Kern 32 auf. Der Kern 32 besteht beispielsweise aus geschäumtem Polyetherimid, die Deckbleche aus einer Legierung vom Typ AlMg 3.

Die Verbindung zwischen dem Hauptdachteil 23 und dem Dachgurt 24 sowie zwischen dem Uebergangsteil 26 und dem Dachgurt 24 erfolgt über ein im Hauptdachteil 23 bzw. im Uebergangsteil 26 integriertes, hohlkammerförmiges Anschlussprofil 36, das beispielsweise ebenfalls aus einer Legierung des Typs AlMgSi stranggepresst ist. Am Dachgurt 24 angeformte und gegen die Innenseite des Wagenkastens gerichtete hinterschnittene Nuten 25 dienen einerseits dem Einspannen des Dachgurtes 24 während der Montage des Wagenkastens 10 und können auch zur Befestigung einer Innenverkleidung verwendet werden.

In Fig. 3 ist die in Fig. 2 gezeigte Verbindung zwischen dem Dachgurt 24 und dem Uebergangsteil 26 detailliert dargestellt. Fig. 3 zeigt den erfindungswesentlichen Kern, nämlich den Anschluss einer Sandwichverbundplatte 37 an ein Profil 35. Der geschäumte Kern 32 der Sandwichverbundplatte 37 ist beidseitig mit den Deckblechen 33, 34 beplankt. Die Deckbleche 33, 34 übergreifen das mit den Oberflächen des Kerns 32 fluchtende Anschlussprofil 36 formschlüssig. Die Verbindung zwischen den Deckblechen 33, 34 und dem Kern 32 bzw. dem Anschlussprofil 36 erfolgt über eine zwischenliegende, in der Zeichnung nicht dargestellte Klebstoffschicht.

Das zum Anschluss an ein Profil vorgesehene, in die Verbundplatte 37 integrierte Anschlussprofil 36 weist einen integralen angeformten ersten Anschlussstreifen 38 und einen vom Anschlussprofil 36 abragenden zweiten Anschlussstreifen 40 auf. Diese beiden Anschlussstreifen 38, 40 des Anschlussprofils 36 liegen einem entsprechend vom Profil 35 abragenden ersten Anschlussstreifen 42 bzw. einem dem Profil 35 integral angeformten zweiten Anschlussstreifen 44 auf. Die beiden Anschlussstreifen 38, 40 am Anschlussprofil 36 sind im montierten Zustand der Verbindung parallel zueinander und in einem Abstand a angeordnet. Dieser Abstand a entspricht dem Abstand der parallel zueinander liegenden Anschlussstreifen 42, 44 am Profil 35.

Der Anschlussstreifen 42 des Profils 35 liegt dem Anschlussstreifen 38 des Anschlussprofils 36 mit zwischengeordnetem Deckblech 33 an und ist an diesen über eine die Anschlussstreifen 38, 42 durchdringende Nietverbindung 46 fixiert. Auf der gegenüberliegenden Seite der Verbindung liegt der Anschlussstreifen 40 des Anschlussprofils 36 dem Anschlussstreifen 44 des Profils 35 an. Das freie Ende des vom Anschlussprofil 36 abragenden Anschlussstreifens 40 ist über eine Hauptschweissnaht 48 durch eine Laserschweissung mit den Anschlussstreifen 44 des Profils 35 verbunden.

Die Deckbleche 33, 34 übergreifen teilweise das Anschlussprofil 36. Die freie Kante des einen Deckbleches 34 ist über eine Schweissnaht 50 durch eine Laserschweissung mit dem darunterliegenden Anschlussstreifen 40 des Anschlussprofils 36 verbunden.

Da bei einer Laserschweissung unbedingt vermieden werden muss, dass Klebstoff zur Schweissstelle gelangen kann, muss im Bereich der Schweissstelle zwischen dem Deckblech 34 und dem darunterliegenden Anschlussstreifens 40 des Anschlussprofils 36 eine entsprechende Vorkehrung getroffen werden. Diese beinhaltet einerseits eine absolute Klebstoffreiheit im Kantenbereich des Deckbleches 34, wobei eine zusätzliche Sicherheit durch eine spezielle Ausbildung des Anschlussprofils 36 im Bereich der Schweissnaht 50 erreicht werden kann. Hierzu ist im Anschlussprofil 36 eine längslaufende Nut bzw. eine querschnittlich U-förmige Längsrinne 52 als sogenannte Klebstoffalle vorgesehen. Diese bewirkt, dass beim Verkleben der Deckbleche 33, 34 mit dem Kern 32 unter Druck ausweichender Klebstoff in der Nut 52 aufgefangen wird und damit nicht in den Bereich der zu erzeugenden Schweissnaht 50 gelangen kann. Durch die Schweissnaht 50 entsteht eine gasdichte Verbindung zwischen dem Deckblech 34 und dem darunterliegenden Anschlusssstreifen 40 des Anschlussprofils 36, so dass eine Verminderung der Haftfähigkeit zwischen dem Deckblech 34 und dem Kern 32 auch nach jahrelanger Betriebszeit ausgeschlossen werden kann.

Wie in Fig. 4 gezeigt, ist der vom Anschlussprofil 36 frei abragende Anschlussstreifen 40 gegenüber der durch den Anschlussstreifen 44 am Profil 35 gebildeten Auflageebene E um einen Winkel α geneigt ausgebildet. Da beim Anschluss der Verbundplatte 37 an das Profil 35 zunächst die Fixierung über die Nietverbindung 46 erfolgt, ergibt sich durch den Neigungswinkel α bei der Auflage des Anschlussstreifens 40 eine Vorspannung um ein Mass b, um welches der Anschlussstreifen 40 -- wie in Fig. 5 gezeigt -- beim Zusammenbau gegenüber seiner ursprünglichen, in Fig. 5 gestrichelt eingezeichneten Lage ausgelenkt wird. Zur Einstellung der Vorspannung ist am Anschlussstreifen 40 eine lokale Reduktion 54 der Profildicke vorgesehen.

Durch die Vorspannung des Anschlussstreifens 40 wird dieser gegen den darunterliegenden Anschlussstreifen 44 des Profils 35 gedrückt, wodurch auch bei grosser Länge der Hauptschweissnaht 48 die maximal zulässige Abstandstoleranz für das Laserschweissen eingehalten werden kann. Gleichzeitig mit der Hauptschweissnaht 48 kann auch die Herstellung der Schweissnaht 50 zwischen dem freien Ende des Deckbleches 34 und dem Anschlussstreifen 40 erfolgen, wobei es hier genügt, wenn das Deckblech 34 während des Schweissvorgangs von einer Anpressrolle niedergedrückt wird.

Die insbesondere in Fig. 3 im Detail dargestellte Verbindungstechnik ist generell überall dort anwendbar, wo eine Sandwichplatte mit einem Profil verbunden werden muss. Bei der in Fig. 1 dargestellten Ausführungsform eines Wagenkastens 10 sind diejenigen Stellen, bei denen die Verbindungstechnik gemäss Fig. 3 zur Anwendung gelangt, mit x bezeichnet. Die übrigen Verbindungsstellen zwischen dem Uebergangsteil 26 und den Fensterpfosten 28, zwischen den Fensterpfosten 28 und der Seitenwand 20 sowie zwischen den Längsträgern 18 und der inneren Bodenplatte 31, sind ausschliesslich genietet.

Mit der hier beschriebenen Verbindungstechnik zwischen Sandwichverbundplatten 37 und Profilen 35 lässt sich der Wagenkasten 10 von Fig. 1 auf einfache Weise dreiteilig vorfertigen und anschliessend durch Einsetzen der Fensterprofile 28 sowie der inneren Bodenplatte 31 endmontieren. Selbstverständlich gilt die hier für den Querschnitt eines Wagenkastens 10 beschriebene Verbindungstechnik auch für die entsprechenden Verbindungen in Wagenlängsrichtung zwischen den Sandwichplatten und zwischengeordneten Querträgern.

## Patentansprüche

1. Konstruktion mit Profilen (35) aus Leichtmetall und an die Profile angeschlossenen Leichtbau-Verbundplatten (37), wobei
- die Verbundplatten (37) einen beidseitig mit Deckblechen (33,34) aus Leichtmetall verklebten Kern (32) aus Kunststoff aufweisen,
**dadurch gekennzeichnet, dass**
- die Deckbleche (33,34) ein in die Verbundplatte (37) integriertes Anschlussprofil (36) aus Leichtmetall teilweise übergreifen und diesem formschlüssig aufliegen,
- das Anschlussprofil (36) Anschlussstreifen (38,40) aufweist, die am Profil (35) entsprechend angeordneten Anschlussstreifen (42,44) paarweise anliegen,
- zumindest einer der Anschlussstreifen (38) mit dem diesem anliegenden Anschlussstreifen (42) mechanisch verbunden ist,
- zumindest einer der Anschlussstreifen (42,40) des Profils (35) oder des Anschlussprofils (36) zur Erzeugung einer auf den anliegenden Anschlussstreifen (44,38) wirkenden Vorspannung gegenüber einer Auflageebene (E) um einen Winkel (α) geneigt ausgebildet ist, und
- der zumindest eine vorgespannte Anschlussstreifen (40) an seiner freien Kante mit dem diesem anliegender Anschlusstreifen (44) über eine Schweissung verbunden ist.

2. Konstruktion nach Anspruch 1, **dadurch gekennzeichnet, dass** die Schweissung eine Laserschweissung ist.

3. Konstruktion nach Anspruch 1 oder 2, **dadurch gekennzeichnet, dass** zumindest das einen vorgespannten Anschlussstreifen (40) übergreifende Deckblech (34) an einer freien Kante mit dem Anschlussstreifen (40) über eine Schweissung, insbesondere über eine Laserschweissung verbunden ist.

4. Konstruktion nach einem der Ansprüche 1 bis 3, **dadurch gekennzeichnet, dass** das Anschlussprofil (36) zumindest im Bereich des vorgespannten Anschlussstreifens (40) eine vom Deckblech (34) übergriffene, querschnittlich U-förmige Längsrinne (52) als Klebstofffalle aufweist.

5. Konstruktion nach einem der Ansprüche 1 bis 4, **dadurch gekennzeichnet, dass** der Kern (32) aus geschäumtem Polyetherimid (PEI) besteht.

6. Konstruktion nach einem der Ansprüche 1 bis 5, **dadurch gekennzeichnet, dass** die Deckbleche (33,34) aus einer AlMg-Legierung, insbesondere einer Legierung vom Typ AlMg3, gefertigt sind.

7. Konstruktion nach einem der Ansprüche 1 bis 6, **dadurch gekennzeichnet, dass** die Anschlussprofile (36) und/oder die Profile (35) aus einer AlMgSi-Legierung stranggepresst sind.

8. Konstruktion nach einem der Ansprüche 1 bis 7, **dadurch gekennzeichnet, dass** das Anschlussprofil (36) ein Hohlkammerprofil ist.

9. Verwendung der Konstruktion nach einem der Ansprüche 1 bis 8 zur Herstellung von Boden-, Wand- und Dachteilen im Hochbau, Tiefbau, Fahrzeugbau, Schiffbau oder Containerbau.

## Claims

1. Construction comprising light-metal sections (35) and lightweight composite panels (37) connected to the sections, the composite panels (37) having a plastic core (32) with light-metal outer sheets (33, 34) bonded to either side, **characterised in that**
- the outer sheets (33, 34) partially overlap a light-metal connecting section (36) integrated into the composite panel (37) and bear positively thereon,
- the connecting section (36) has connecting strips (38, 40) which bear in pairs against connecting strips (42, 44) arranged in a corresponding manner on the section (35),
- at least one of the connecting strips (38) is joined mechanically to the adjacent connecting strip (42),
- at least one of the connecting strips (42, 40) of the section (35) or of the connecting section (36) is inclined at an angle (α) relative to a bearing plane (E) in order to produce pretension acting on the adjacent connecting strip (44, 38), and
- the at least one pretensioned connecting strip (40) is joined at its free edge to the adjacent connecting strip (44) by means of a weld.

2. Construction according to claim 1, **characterised in that** the weld is a laser weld.

3. Construction according to claim 1 or claim 2, **characterised in that** at least the outer sheet (34) overlapping a pretensioned connecting strip (40) is joined at a free edge to the connecting strip (40) by means of a weld, in particular by means of a laser weld.

4. Construction according to one of claims 1 to 3, **characterised in that** the connecting section (36) is provided at least in the region of the pretensioned connecting strip (40) with a longitudinal channel (52) having a U-shaped cross section, overlapped by the outer sheet (34) and serving as an adhesive trap.

5. Construction according to one of claims 1 to 4, **characterised in that** the core (32) consists of foamed polyether imide (PEI).

6. Construction according to one of claims 1 to 5, **characterised in that** the outer sheets (33, 34) are made of an AlMg alloy, in particular an alloy of the AlMg 3 type.

7. Construction according to one of claims 1 to 6, **characterised in that** the connecting sections (36) and/or the sections (35) are extruded from an AlMgSi alloy.

8. Construction according to one of claims 1 to 7, **characterised in that** the connecting section (36) is a hollow section.

9. Use of the construction according to one of claims 1 to 8 for the production of floor, wall and roof parts in building, civil engineering, vehicle construction, shipbuilding or container manufacture.

## Revendications

1. Construction avec profilés (35) en métal léger et avec plaques composites (37) de construction légère raccordées aux profilés, dans laquelle les plaques composites (37) comprennent un noyau (32) en matière plastique collé des deux côtés avec des tôles de couverture (33, 34) en métal léger,
**caractérisée en ce que** :
- les tôles de couverture (33, 34) coiffent partiellement un profilé de raccordement (36) en métal léger intégré dans la plaque composite (37) et prennent appui sur celui-ci en coopération de formes,
- le profilé de raccordement (36) comprend des bandes de raccordement (38, 40) qui prennent appui par paires sur la bande de raccordement (42, 44) agencée en correspondance sur le profilé (35),
- l'une au moins des bandes de raccordement (38) est reliée par voie mécanique à la bande de raccordement (42) en appui sur celle-ci,
- l'une au moins des bandes de raccordement (42, 40) du profilé (35) ou du profilé de raccordement (36) est réalisée de façon inclinée d'un angle (α) par rapport à un plan d'appui (E) pour générer une précontrainte agissant sur la bande de raccordement (44, 38) en appui, et
- ladite au moins une bande de raccordement précontrainte (40) est reliée via une soudure au niveau de son arête libre à la bande de raccordement (44) en appui sur celle-ci.

2. Construction selon la revendication 1, **caractérisée en ce que** la soudure est une soudure au laser.

3. Construction selon l'une ou l'autre des revendications 1 et 2, **caractérisée en ce qu'**au moins la tôle de couverture (34) coiffant la bande de raccordement précontrainte (40) est reliée via une soudure, en particulier une soudure au laser, au niveau d'une arête libre, à la bande de raccordement (40).

4. Construction selon l'une quelconque des revendications 1 à 3, **caractérisée en ce que** le profilé de raccordement (36) comprend, du moins au niveau de bande de raccordement précontrainte (40), une rainure longitudinale (52) de section en forme de U à titre de piège à colle, coiffée par la tôle de couverture (34).

5. Construction selon l'une quelconque des revendications 1 à 4, **caractérisée en ce que** le noyau (32) est constitué en mousse de polyétherimide (PEI).

6. Construction selon l'une quelconque des revendications 1 à 5, **caractérisée en ce que** les tôles de couverture (33, 34) sont fabriquées en un alliage de AlMg, en particulier en un alliage du type AlMg3.

7. Construction selon l'une quelconque des revendications 1 à 6, **caractérisée en ce que** les profilés de raccordement (36) et/ou les profilés (35) sont extrudés en un alliage de AlMgSi.

8. Construction selon l'une quelconque des revendications 1 à 7, **caractérisée en ce que** le profilé de raccordement (36) est un profilé à chambre creuse.

9. Utilisation de la construction selon l'une quelconque des revendications 1 à 8 pour fabriquer des parties de plancher, de cloison, de mur, et de toiture dans la construction de bâtiments, le génie civil, la construction de véhicules, la construction navale ou la construction de containers.
